Europäisches Patentamt

European Patent Office

Office européen des brevets

(11) Veröffentlichungsnummer: **0 179 346**
**A2**

(12) **EUROPÄISCHE PATENTANMELDUNG**

(21) Anmeldenummer: **85112690.4**

(22) Anmeldetag: **07.10.85**

(51) Int. Cl.⁴: **B 01 D 53/14**
**C 10 K 1/16**

(30) Priorität: **25.10.84 DE 3439165**

(43) Veröffentlichungstag der Anmeldung:
**30.04.86 Patentblatt 86/18**

(84) Benannte Vertragsstaaten:
**BE DE FR NL**

(71) Anmelder: **Linde Aktiengesellschaft**
**Abraham-Lincoln-Strasse 21**
**D-6200 Wiesbaden(DE)**

(72) Erfinder: **Karwat, Heinz, Dr. rer. nat.**
**Gistlstrasse 60**
**D-8023 Pullach(DE)**

(74) Vertreter: **Schaefer, Gerhard, Dr.**
**Linde Aktiengesellschaft Zentrale Patentabteilung**
**D-8023 Höllriegelskreuth(DE)**

(54) Verfahren zum Auswaschen saurer Gase aus Gasgemischen.

(57) Es wird ein Verfahren zum Auswaschen saurer Gase, insbesondere $CO_2$ und $H_2S$, aus Gasgemischen durch Wäsche mit Methanol beschrieben, das alkalisch reagierende Substanzen enthält und nach Aufnahme der sauren Gase durch Entspannen, Strippen und/oder Warmregenerieren regeneriert und wiederverwendet wird. Um eine Verbesserung der $H_2S$-Abstrippung aus dem beladenen Methanol in einer Regeneriersäule zu ermöglichen, wird vorgeschlagen, $CO_2$ dem Kreislaufmethanol an einer Stelle zuzuführen, an der es üblicherweise $CO_2$-frei ist.

EP 0 179 346 A2

Croydon Printing Company Ltd.

0179346

Verfahren zum Auswaschen saurer Gase
aus Gasgemischen

Die Erfindung betrifft ein Verfahren zum Auswaschen saurer Gase, insbesondere $CO_2$ und H2S, aus Gasgemischen durch Wäsche mit Methanol, das alkalisch reagierende Substanzen enthält und nach Aufnahme der sauren Gase durch Entspannen, Strippen und/oder Warmregenerieren regeneriert und wiederverwendet wird.

Es ist bekannt, physikalische Lösungsmittel zur Reinigung von Syntheserohgasen von $CO_2$, COS und $H_2S$ zu verwenden. Da die Absorptionsfähigkeit der physikalischen Lösungsmittel, wie z.B. Methanol, für die auszuwaschenden Gase mit sinkender Temperatur zunimmt, werden diese Wäschen bei möglichst niedriger Temperatur durchgeführt. Bei Verwendung von Methanol liegen die Waschtemperaturen dabei beträchtlich unter 0°C. Die Regenerierung des mit den ausgewaschenen Gasbestandteilen beladenen physikalischen Lösungsmittels erfolgt meist in einer Kombination von Drucksenkung und/oder Strippen und/oder Warmregenerieren. Dabei werden die absorbierten Gasbestandteile wieder frei. Das regenerierte Lösungsmittel wird in die Wäsche zurückgeführt.

In dem Kreislaufmethanol wird aus Korrosionsgründen häufig ein bestimmter Gehalt an alkalisch reagierenden Substanzen z.B. $NH_3$, ein Amin oder Alkalisalz, von einigen 100 bis 1000 Gew.ppm aufrechterhalten. Diese Substanzen, beispielsweise Ammoniak, erschweren allerdings die Ausstrippung von $H_2S$ in der Regeneriersäule. In diesem Fall muß die Regeneriersäule als Abhilfe mit mehr Böden ausgestattet oder mehr Dampf aufgewendet werden, um zu verhindern, daß $H_2S$ im heißregenerierten Methanol zurückbleibt und auf die Waschsäule gelangt. $CO_2$ reagiert mit im Methanol gelösten $NH_3$ und $NH_4HS$ unter Bildung von Ammonkarbamat bzw. führt, da $CO_2$ stärker sauer ist als $H_2S$, zur Freisetzung von $H_2S$ aus $NH_4HS$ sowohl ins gewaschene Gas als auch in die $CO_2$- oder $CO_2$-/Strippgas-Fraktion. In einer Wäsche tritt eine störende Freisetzung von $H_2S$ ins gewaschene Gas nicht auf, wenn am Kopf höchstens Spuren von $CO_2$ (z.B. 1 bis 50 vppm) vorhanden sind, jedoch wird diese erheblich, wenn am Kopf der Säule das $CO_2$ nicht vollständig ausgewaschen werden soll.

Der vorliegenden Erfindung liegt daher die Aufgabe zugrunde, ein Verfahren der eingangs genannten Art so auszugestalten, daß eine Verbesserung der $H_2S$-Abstrippung aus dem beladenen Methanol in einer Regeneriersäule ermöglicht wird.

Diese Aufgabe wird erfindungsgemäß dadurch gelöst, daß $CO_2$ dem Kreislaufmethanol an einer Stelle zugeführt wird, an der es üblicherweise $CO_2$-frei ist.

Erfindungsgemäß erfolgt eine $CO_2$-Einspeisung in das Methanol in einer solchen Menge, daß das $H_2S$ bis zu einer im gewaschenen Gas nicht mehr störenden Konzentration in der Regeneriersäule abgetrieben werden kann, aber die $CO_2$-Auswaschung noch ausreichend ist.

In bevorzugter Weise wird dabei $CO_2$ dem mit $H_2S$ beladenen Methanol während der Regenerierung zugeführt. Das Vorhanden-

sein von $CO_2$ führt zur bereits erwähnten Bildung von Ammonkarbamat und damit zur Freisetzung von $H_2S$. Dieses $H_2S$ geht dann zusammen mit dem übrigen $H_2S$ über Kopf der Regeneriersäule ab.

Die nötige $H_2S$-freie $CO_2$-Menge kann in vorteilhafter Weise als reines $CO_2$-Gas, $CO_2$-haltiges Gasgemisch (z.B. Zwischenentspannungsgas aus dem Waschverfahren selbst) oder als im Methanol gelöstes $CO_2$ eingespeist werden.

Bei Anwendung des erfindungsgemäßen Verfahrens kann somit weiterhin in einer Methanolwäsche $NH_3$-, amin-oder alkalihaltiges Methanol gefahren werden, was - wie bereits erwähnt - aus Korrosionsgründen günstig ist. Im Gegensatz zu bisher üblichen Verfahren muß dabei nicht die Regeneriersäule mit mehr Böden ausgestattet oder mehr Dampf aufgewendet werden. Überdies findet keine $H_2S$-Verschleppung in die $CO_2^-$ oder $CO_2$-Strippgas-Fraktion mehr statt.

Methanol wird bekanntermaßen auch zur Verhinderung der Eisbildung bei der Abkühlung eines Gases vor einer Wäsche verwendet. Die Erfindung bezieht sich daher ebenfalls auf ein Verfahren zum Abkühlen $H_2S$- und wasserhaltiger Gase vor einer Wäsche unter Zugabe von Methanol, das nach Aufnahme von Wasser von diesem in einer Methanol-Wasser-Trennsäule, der eine alkalisch reagierende Substanz zugeführt wird, befreit und wiederverwendet. Die Einspeisung einer alkalisch reagierenden Substanz, wie beispielsweise Natronlauge, erfolgt aus dem Grunde, da mit dem Rohgas meist auch Spuren von organischen Säuren, wie beispielsweise Ameisensäure, miteingetragen werden und zusammen mit dem Wasser von dem Methanol vor der eigentlichen Wäsche absorbiert werden. In der Methanol-Wasser-Trennsäule verursachen diese Säuren eine Absenkung des pH-Wertes, die durch die Laugenzugabe verhindert wird. In Gegenwart einer Lauge bildet sich jedoch als unerwünschtes Nebenprodukt z.B. NaHS und Na2S, das über den Sumpf der Trennsäule gelöst in das Abwasser abläuft. Wird nun dieses Abwasser zur Auswaschung von Methanoldampf aus einer $CO_2$- oder $CO_2/N_2$-Fraktion verwendet, so werden - ähnlich wie in einer Synthesegas-Waschsäule - mit $CO_2$ die Alkalisulfide zu Carbonaten umgesetzt und $H_2S$ in die gewaschenen Gase eingeschleppt. In gleicher Weise kann, wenn das Abwasser an die Umgebung abgegeben wird, das in der Luft enthaltene $CO_2$ die Freisetzung von $H_2S$ an die Atmosphäre bewirken. Dies kann erfindungsgemäß durch Einblasen von $CO_2$ oder $CO_2$-haltigen Gasen in die Methanol-Wasser-Trennsäule, bevorzugt in deren Sumpf, verhindert werden.

Im folgenden sei das erfindungsgemäße Verfahren anhand eines schematisch dargestellten Ausführungsbeispiels näher erläutert.

Bei 1 strömen 100 000 Nm³/h zu reinigendes Synthesegas mit einer Temperatur von ca. 30°C und einem Druck von 70 bar in einen Vorkühler 2 ein. Das Synthesegas besteht aus

| | |
|---|---|
| $H_2$ | 64 Vol.% |
| $CO_2$ | 33 Vol.% |
| CO | 2 Vol.% |
| $H_2S$ | 1 Vol.% |
| Wasser | 80 kg/h |
| Ameisensäure | Spuren |

Im Vorkühler 2 wird das mit Wasser gesättigte Gas mittels aus der Wäsche über Leitungen 28 und 29 zurückkehrender Gasfraktionen, auf die noch näher eingegangen wird, auf ca. -30°C abgekühlt. Um eine Verlegung mit Wassereis zu verhindern, werden in den Vorkühler 2 über Leitung 3 160 kg/h Methanol, das aus der nachfolgenden Methanolwäsche abgezogen wird, eingespritzt. Das so vorgekühlte Synthesegas gelangt über einen Abscheider 18 und Leitung 4 zur Ent- fernung der sauren Bestandteile $CO_2$ und $H_2S$ in eine Methanol- waschsäule 5. Dort werden im unteren Bereich mit einer Me- thanolteilmenge Schwefelverbindungen ausgewaschen. Im mittle- ren Teil der Waschsäule 5 erfolgt die $CO_2$-Grobwäsche mit der Hauptmenge an Methanol und im oberen Teil die Feinreinigung. Im mittleren Teil der Waschsäule 5 wird mit teilregeneriertem, im oberen Teil mit vollständig regeneriertem Methanol gewaschen. Das gereinigte Gas strömt über Leitung 28 ab zum Vorkühler 2 und dann zur weiteren Verarbeitung.

Das mit $CO_2$ beladene Methanol wird über Leitung 6 einem Zwischenentspannungsbehälter 33 zugeführt, in welchen mit- gelöster $H_2$ (49 Vol.%) und CO (1 Vol.%), Rest $CO_2$ entgast wird, und schließlich einer Regeneriersäule 7 zugeführt und in dieser durch Strippen mit einem durch Leitung 8 zuge- führten Hilfsgas, z.B. $N_2$, von $CO_2$ befreit und gelangt wie- der über Leitung 9 in die Waschsäule 5 zurück. Die dabei freiwerdenden Gase, hauptsächlich $CO_2$ und Strippgas, werden über Kopf der Säule 7 abgeführt und strömen über Leitung 29 zum Vorkühler 2.

Das sich im Sumpf der Waschsäule 5 ansammelnde, $H_2S$- und $CO_2$-haltige Methanol gelangt über Leitung 10 in einen Zwischenentspannungsbehälter 34, in welchen ein ähnliches Gas wie aus Behälter 53 gewonnen wird, das jedoch $H_2S$ enthält, und über die Wärmetauscher 11 und 12 in eine Regeneriersäule 13. Im Wärmetauscher 11 wird das Methanol auf etwa Umgebungstemperatur, im Wärmetauscher 12 auf etwa 65°C angewärmt und gelangt dann über Leitung 14 in die Regeneriersäule 13. Dort wird das Methanol durch Kochen vollständig entgast und das regenerierte Methanol vom Sumpf der Regeneriersäule 13 über Leitung 15 abgezogen und in den Wärmetauschern 12 auf 30°C und 11 auf -10°C abgekühlt. Nach weiterer Abkühlung auf etwa -40°C in einem Kältemittelverdampfer 16 gelangt das Methanol auf die Waschsäule 5 zurück. Die in der Heiß- regeneriersäule 13 freiwerdende $CO_2$- und $H_2S$-Fraktion strömt über Leitung 17 vom Kopf der Säule ab und kann zur Gewinnung von elementarem Schwefel weiterbehandelt werden.

Das im Vorkühler 2 eingespritzte mit Wasser beladene, kalte (-30°C) Methanol gelangt in den Abscheider 18 und über Leitung 19 nach Anwärmung auf Umgebungstemperatur in einem Gegenstromwärmetauscher 20 in einen Abscheider 21, wo die Hauptmenge der gelösten Gase, insbesondere $CO_2$, durch Entspannen auf 2 bar abgetrennt wird. Diese Gase werden über Leitung 22 der $CO_2$- und $H_2S$-Fraktion aus der Regene- riersäule 13 zugemischt. Das Methanol-Wasser-Gemisch gelangt über Leitung 23 in die dampfbeheizte und wassergekühlte Wasser-Methanol-Trennsäule 24. In dem Wasser sind noch Spuren von Ameisensäure vorhanden. Zur Neutralisierung dieser Säure wird über Leitung 32 Lauge, beispielsweise 8 Gew.%-ige NaOH in einer Menge von 4 l/h eingespeist. Die Laugenzugabe bewirkt, daß der pH-Wert, der durch Spuren der sauren Verbindungen absinkt, ausgeglichen wird. Über Leitung 25 wird sodann ein Gemisch aus Wasser, Ameisensäure und Lauge am Fuß, über Wärmetauscher 20 und Leitung 26 $H_2S$- und $CO_2$-haltiges Methanol am Kopf der Säule 24 abgezogen und zur Methanol-Regeneriersäule 13 geführt. Inertgase können die Säule über Leitung 27 verlassen.

Durch das im Methanol enthaltene Ammoniak wird in der Re- generiersäule 13 die $H_2S$-Abstrippung soweit erschwert, daß etwas $H_2S$ (100 Nl/h) im heißregenerierten Methanol zurückbleibt und auf die Säule 5 gelangt. Dort reagiert das im Säulenkopf belassene $CO_2$ (2 Vol.%) mit dem im Methanol gelösten $NH_3$ und $NH_4HS$ unter Bildung von Ammon- karbamat und Freisetzung von $H_2S$ ins Kreislaufmethanol. Davon gelangen 13 l/h entsprechend 0,2 vppm $H_2S$ ins ge- waschene Gas.

Um dies zu vermeiden, wird erfindungsgemäß in den unteren Teil der Säule 13 über Leitung 30 pro mol im Sumpf der Regeneriersäule enthaltenes $NH_3$ 1/2 bis 1 mol $CO_2$ eingeblasen. Dieses kann aus dem Zwischenentspannungsbehälter 33, der ein $CO_2$-reiches, $H_2S$-freies Gas bereits unter ausreichendem Druck enthält, genommen werden.

Die in der Wasser-Methanol-Trennsäule 24 vorhandene Lauge bewirkt, daß NaHS, $Na_2S$, $NaHCO_3$ und $Na_2CO_3$ gebildet wird. Um zu verhindern, daß schwefelhaltige Verbindungen mit dem Wasser abgezogen werden, wird erfindungsgemäß über Leitung 31 $CO_2$ in einer Menge von 100 l/h in die Säule 24 eingeblasen.

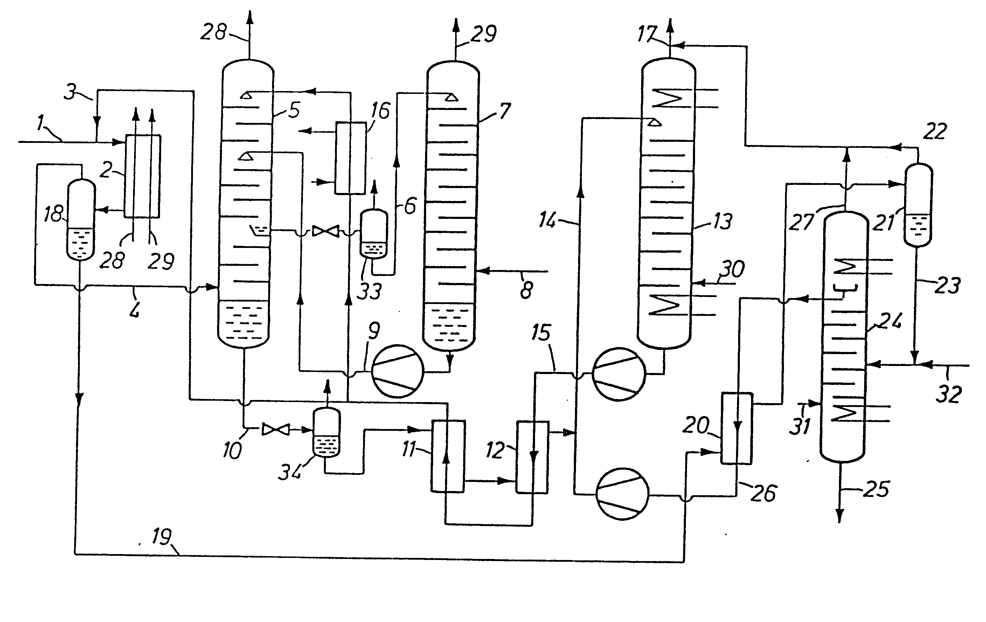

Patentansprüche

1. Verfahren zum Auswaschen saurer Gase, insbesondere $CO_2$ und $H_2S$, aus Gasgemischen durch Wäsche mit Methanol, das alkalisch reagierende Substanzen enthält und nach Aufnahme der sauren Gase durch Entspannen, Strippen und/oder Warmregenerieren regeneriert und wiederverwendet wird, dadurch gekennzeichnet, daß $CO_2$ dem Kreislaufmethanol an einer Stelle zugeführt wird, an der es üblicherweise $CO_2$-frei ist.

2. Verfahren nach Anspruch 1, dadurch gekennzeichnet, daß $CO_2$ dem mit $H_2S$ beladenen Methanol während der Regenerierung zugeführt wird.

3. Verfahren nach Anspruch 1 oder 2, dadurch gekennzeichnet, daß reines $CO_2$-Gas, $CO_2$-haltiges Gasgemisch oder im Methanol gelöstes $CO_2$ eingespeist wird.

4. Verfahren zur Abkühlung $H_2S$- und wasserhaltiger Gase vor einer Wäsche unter Zugabe von Methanol, das nach Aufnahme von Wasser von diesem in einer Methanol-Wasser-Trennsäule, der eine alkalisch reagierende

0179346

Substanz zugeführt wird, befreit und wieder verwendet wird, dadurch gekennzeichnet, daß $CO_2$ in die Methanol-Wasser-Trennsäule eingespeist wird.